# EUROPEAN PATENT APPLICATION

(11) **EP 1 746 852 A1**
(43) Date of publication of application: **24.01.2007**
(21) Application number: 05256573.6
(22) Date of filing: 24.10.2005
(51) Int. Cl.: H04Q 7/38

(54) **Wireless communication device and method of controlling the wireless communication device**

(30) Priority: 19.07.2005 JP 2005208072
(71) Applicant: Fujitsu Ltd., Kawasaki-shi, Kanagawa 211-8588 (JP)
(72) Inventor: Kawasaki, Yoshihiro, c/o Fujitsu Limited, Kawasaki-shi Kanagawa 211-8588 (JP); Kawabata, Kazuo, c/o Fujitsu Limited, Kawasaki-shi Kanagawa 211-8588 (JP); Tajima, Yoshihara, c/o Fujitsu Limited, Kawasaki-shi Kanagawa 211-8588 (JP); Furukawa, Hideto, c/o Fujitsu Limited, Kawasaki-shi Kanagawa 211-8588 (JP); Obuchi, Kazuhisa, c/o Fujitsu Limited, Kawasaki-shi Kanagawa 211-8588 (JP)
(74) Representative: Stebbing, Timothy Charles

(57) **Abstract**

The present invention provides a wireless communication device (10) for communicating information with a base station, comprising a storage unit (35) for storing a maximum value of a transmission rate (R) for information transmission to the base station, and a plurality of different step values which are used to increase/decrease the transmission rate (R), and a transmission rate control unit (30) for selecting one of the plurality of step values and increasing/decreasing the transmission rate (R) in units of the selected step value in a step-by-step manner.

## Description

The present invention relates to a technique of mobile communications, and particularly to a technique which can be advantageously applied to a technique of wireless data transmission in an uplink (or a reverse link i.e. an upstream channel) from a terminal to a base station in a wireless communication network such as a mobile telephone network or the like.

For example, in a mobile communications technique represented by a mobile phone system, in response to requests for diverse and high-quality services which are realized by the mobile phone system, further high-speed services are considered not only for information transmission from a base station to a terminal (downlink) but also for information transmission from the terminal to the base station (uplink).

For example, in a meeting of what is known as the 3GPP (Third Generation Partners Project: a standardization project for a third generation mobile communications system), specifications for HSUPA (High Speed Uplink Packet Access) have been prepared in order to realize higher speed for a wireless uplink in a mobile phone system based on a WCDMA method.

Under HSUPA, two methods, i.e. a method in which a base station actively performs scheduling for uplink data transmission, and a method in which each terminal transmits data autonomously to some extent (hereinafter, referred to as an autonomous transmission method) are considered. It is expected that specifications for both will be prepared respectively, so that they can be used selectively in accordance with the situation in a practical system, or that a system which combines both functions will be used. Also, these two methods can be used not only for an uplink in a third generation WCDMA system, but also for an uplink in a wireless packet transmission method in systems realized after the third generation system.

As methods of realizing the above autonomous transmission methods, there are
(1) A method in which a common maximum allowable transmission rate having been set to a low value is assigned to all the terminals, and each terminal transmits data freely within the range of the assigned rate
(2) A method in which a common maximum allowable transmission rate is assigned to all the terminals and each terminal starts transmission with a predetermined lowest rate, and sequentially ramps up a transmission rate in a step-by-step manner.

In the former method, each terminal can transmit data freely, however as data can only be transmitted at a low rate a large amount of data can not be transmitted. In the latter method, this problem is solved. The transmission rate is ramped up and when the transmission rate reaches the maximum allowable transmission rate, the transmission rate is no longer ramped up. In both of these methods, the maximum allowable transmission rate is periodically updated in accordance with loads on receiving units at base stations, and all terminals are notified, generally via common control channels.

A reason why the maximum allowable transmission rate is set to a low value in the former method, and the transmission rate is ramped up from the lowest rate at each terminal in the latter, is that there is a probability that in the autonomous transmission method, excess interference occurs in a receiving unit of a base station because all the terminals can transmit simultaneously, and that this excess interference has to be avoided. Additionally, it is possible that a function is employed to issue a command in which base stations in neighboring cells order their terminals to ramp down transmission rates because uplink signals transmitted by the respective terminals reach base stations in neighboring cells.

In an autonomous transmission method in which ramping up is conducted, each terminal ramps up a transmission rate R from the lowest rate by a constant step value (delta R) in a step-by-step manner regardless of the amount of data to be transmitted. In this method, a long time is required to complete transmission when the terminal is to transmit a large amount of data. In this case, the lowest rate is a specified constant value, a value determined on a network side and which each terminal is notified of, or a value determined on a terminal side based on a method regulated by a specification.

When a high step value is employed, a time required to complete transmission is reduced, however, when all the terminals employ a high step value, occurrence of interference at receiving units in base stations rapidly increases, so that saturation of receiving signals occurs in a short time, or a probability is increased in which an instantaneous overshoot (variation beyond an allowable value) occurs in interference at the receiving units in the base stations. Also, if step values are determined uniformly in accordance with the data amount to be transmitted by respective terminals in an autonomous transmission method, that method can not be considered a transmission method which is equitable to the respective terminals.

As above, in a conventional technique, a step value (delta R) upon ramping up a transmission rate in a step-by-step manner in an autonomous transmission method is constant, so that there is a technical problem that the time required for transmission is long when a large amount of data is transmitted.

When a terminal with a large amount of data to be transmitted is simply given priority in order to solve the above technical problem, another technical problem arises that equitability among users (terminals) is lost.

In a configuration of the Patent Document 1, it is intended to realize an efficient utilization of the limited radio resources and an improvement of throughput based on radio resource distribution in accordance with a service quality to be provided by a network, by providing a resource dividing unit for dividing a radio resource into unit radio resources in a multidimensional space, and an assigning control unit for assigning radio resources with weight coefficients determined based on a transmission situation to the respective unit radio resources. However, in the above technique of the Patent Document 1, the technical problem as described above in the autonomous transmission method is not recognized.

### Patent Document 1

Japanese Patent Application Publication No. 2004-248300

It is therefore desirable to provide a mobile communications technique that can improve throughput in the case where respective wireless communication devices under the control of base stations autonomously ramp up a transmission rate while transmitting information to the base stations.

It is also desirable to provide a mobile communications technique that can realize both improvement of throughput in respective wireless communication devices and secure fairness of distribution of a transmission rate among a plurality of wireless communication devices in the case where respective wireless communication devices under the control of base stations autonomously ramp up transmission rates while transmitting information to the base stations.

A first aspect of the present invention provides a wireless communication device for communicating information with a base station, comprising a storage unit for storing a maximum value of a transmission rate for information transmission to the base station, and storing a plurality of different step values which are used to increase or decrease the transmission rate, and a transmission rate control unit for selecting one of the plurality of step values and increasing or decreasing the transmission rate in units of the selected step value in a step-by-step manner.

A second aspect of the present invention provides a wireless communication device for communicating information with a base station, comprising a storage unit for storing a maximum value of a transmission rate for information transmission to the base station, a plurality of different step values which are used to increase or decrease the transmission rate, and a transmission rate control unit for selecting one of the plurality of step values, increasing or decreasing the transmission rate in units of the selected step value in a step-by-step manner, decreasing the transmission rate and interrupting the information transmission in the case where a step value which is relatively high is used at the time of receiving, externally, a transmission rate decreasing command that requests a decrease of the transmission rate, and decreasing the transmission rate in the case where a step value which is relatively low is used.

A third aspect of the present invention provides a method of controlling a wireless communication device for communicating information with a base station, comprising a first step of setting a plurality of different step values in the wireless communication device, a second step of increasing/decreasing a transmission rate of information transmission to the base station in units of one of the plurality of step values in a step-by-step manner, conducting a decrease of the transmission rate and interruption of the information transmission in the case that a step value which is relatively high is used at the time of receiving, externally, a transmission rate decreasing command that requests a decrease of the transmission rate, and conducting a decrease of the transmission rate in the case where a step value which is relatively low is used.

According to the above present invention, as a unit increment value (delta R), a plurality of values different in size (a plurality of values with the minimum value as a default value) are set, and each wireless communication device in a territorial region (cell) of a base station ramps up a transmission rate applied to transmission data to be transmitted to a base station by using an arbitrary unit increase/decrease value (step value) so that information transmission from a wireless communication device to a base station is realized with a high throughput based on an effectively utilized transmission rate which is available between the base station and the wireless communication device by ramping up the transmission rate by using a unit increment value which is high based on an autonomous determination by the wireless communication device when a number of the wireless communication devices in the territorial region of the base station is relatively small.

Also, a neighboringbase station outside the cell transmits a transmission rate decreasing command to the wireless communication device when an amount of interference in a receiving unit exceeds a predetermined threshold value, and the wireless communication device, when receiving this command, decreases a transmission rate in accordance with a size of the unit increment value employed at that time, and conducts interruption of transmission, so that an unfair distribution of transmission rate to particular wireless communication devices is avoided.

For example, when the unit increment value employed at the time of receiving the command is high, a heavy penalty not only of decrease of the transmission rate but also of transmission interruption is imposed so that fairness of transmission rate distribution among a plurality of wireless communication devices under the control of a particular base station is secured.

In other words, in the present invention, upon data transmission from a wireless communication device with relatively large amount of transmission data to a base station, a relatively high throughput is secured by applying a high transmission rate to a ramping up process, and further, when excessive interference with a neighboring base station occurs, a penalty not only of decrease of the transmission rate but also of transmission interruption is imposed on the wireless communication device employing a high unit increment value so that fairness regarding selection of the step value among a plurality of wireless communication devices under the control of particular base station is secured.

Reference is made, by way of example only, to the accompanying drawings in which:
Fig. 1 is a block diagram showing an example of a configuration of a wireless communication device for implementing a method of controlling a wireless communication device as an embodiment of the present invention;
Fig. 2 is a schematic diagram showing an example of a configuration of a mobile communications system comprising the wireless communication device as an embodiment of the present invention;
Fig. 3 is a graph showing an example of operations of the wireless communication device and a method of controlling the wireless communication device as an embodiment of the present invention;
Fig. 4 is a graph showing an example of operations of the wireless communication device and a method of controlling the wireless communication device as an embodiment of the present invention;
Fig. 5 is a graph showing an example of operations of the wireless communication device and a method of controlling the wireless communication device as an embodiment of the present invention;
Fig. 6 is a flowchart showing an example of operations of the wireless communication device and a method of controlling the wireless communication device as an embodiment of the present invention;
Fig. 7 is a flowchart showing a variation of operations of the wireless communication device and a method of controlling the wireless communication device as an embodiment of the present invention;
Fig. 8 is a flowchart showing a variation of operations of the wireless communication device and a method of controlling the wireless communication device as an embodiment of the present invention; and
Fig. 9 is a flowchart showing a variation of operations of the wireless communication device and a method of controlling the wireless communication device as an embodiment of the present invention.

Hereinafter, embodiments according to the present invention will be explained in detail by referring to the drawings.

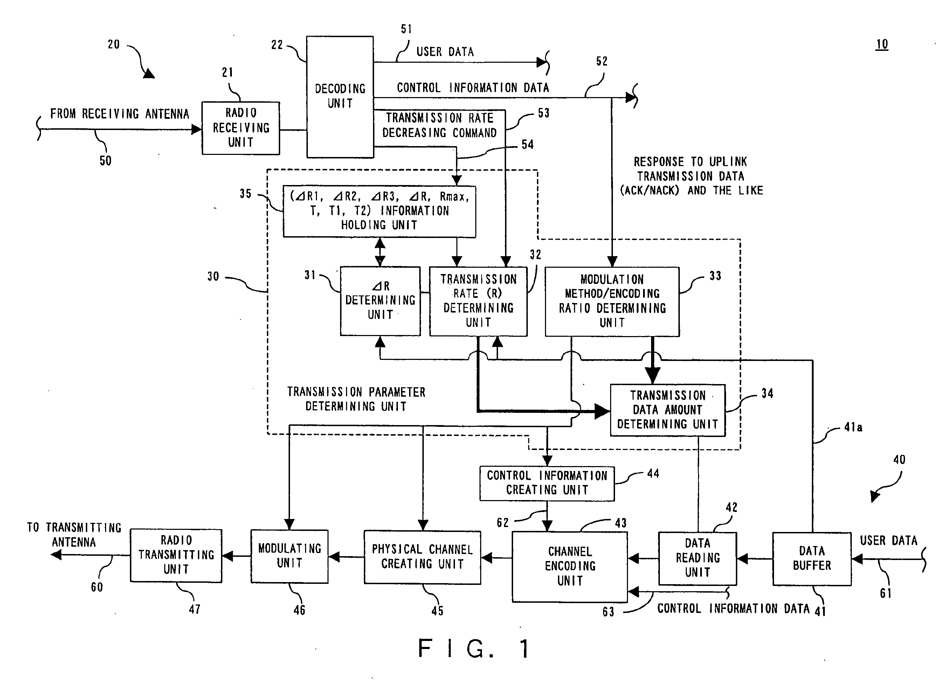

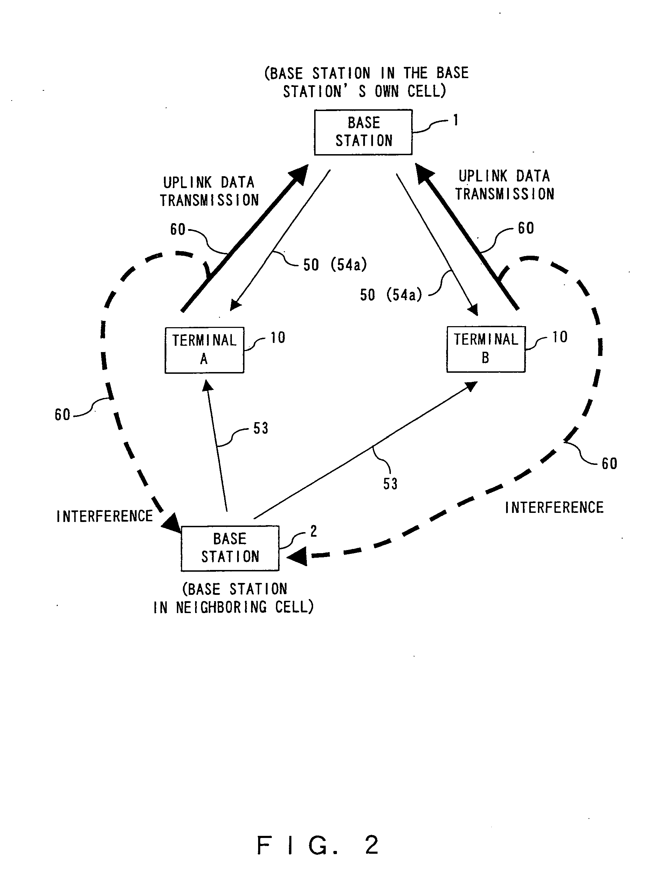

Fig. 1 is a block diagram showing an example of a configuration of a wireless communication device for implementing a method of controlling a wireless communication device as an embodiment of the present invention. Fig. 2 is a schematic diagram showing an example of a mobile communications system comprising the wireless communication device according to the present embodiment.

As shown in Fig. 2, the mobile communications system according to the present embodiment comprises a plurality of base stations 1 and 2, and a plurality of communication terminals 10 for conducting wireless communications with these base stations. When the mobile communications system is a mobile phone system, each communication terminal 10 is, for example, a mobile phone.

In the present embodiment, the communication terminals 10 exist in a territorial region (cell) of the base station 1, and data transmission from each communication terminal 10 to the base station 1 is conducted based on an autonomous transmission method in which each communication terminal 10 transmits autonomously to some extent. Additionally, in the present embodiment, a method is employed as will be explained later in which a common maximum allowable transmission rate is assigned to all the communication terminals 10, and each communication terminal 10 starts transmission with a predetermined lowest rate and sequentially ramps up the transmission rate in a step-by-step manner.

In this case, each of the base station 1 and the base station 2 comprises a function for notifying the communication terminals 10 in its territory of setting information 54, which will be explained later, as occasion demands.

Also, each of the base station 1 and the base station 2 comprises a function for transmitting, when interference occurs due to a wireless transmission signal 60 from a communication terminal 10 outside the base station' s territory, a transmission rate decreasing command 53 to communication terminals 10 in order to cause the corresponding communication terminal 10 to decrease a transmission rate R and or stop transmission, where the transmission rate decreasing command 53 will be explained later.

The communication terminal 10 in the present embodiment comprises a receiving unit 20, a transmission parameter determining unit 30 and a transmitting unit 40, as shown in Fig. 1.

The receiving unit 20 comprises a radio receiving unit 21 and a decoding unit 22.

The radio receiving unit 21 comprises a low noise amplifier and an A/D converter or the like (not shown). The receiving unit 21 amplifies a radio reception signal 50 arriving at a receiving antenna (not shown), by a low noise amplifier, converts the signal into a low frequency signal, converts the signal into a digital signal by an A/D converter, conducts orthogonal demodulation, obtains a baseband signal (I component and Q component), and outputs it to the decoding unit 22.

The radio reception signal 50 arriving at the communication terminal 10 from the base station 1 or 2 conveys one or a combination of users data 51, the transmission rate decreasing command 53, the setting information 54, control information data 52 which is control information other than the transmission rate decreasing command 53 or the setting information 54.

The decoding unit 22 conducts a demodulation process on a baseband signal input from the radio receiving unit 21, obtains a signal bit sequence, conducts processes such as deinterleaving, signal demuxing, decoding and the like, obtains an information signal, and divides it into a user data signal (user data 51), a control signal and the like (for example, the control information data 52, the transmission rate decreasing command 53 and the setting information 54).

In the case of the present embodiment, the setting information 54 can comprise at least one of a maximum allowable transmission rate 54a (maximum allowable transmission rate Rmax), a minimum allowable transmission rate 54b (minimum allowable transmission rate Rmin), a step value 54c (step values ΔR, ΔR1, ΔR2 and ΔR3 which will be described later), a transmission interruption time 54d (transmission interruption times T, T1 and T2).

The above setting information 54 is transmitted, as radio reception signals 50, to communication terminals 10 under the control of the base station 1, and is held in a setting information holding unit 35 (storage unit).

Additionally, the setting information 54 does not always have to be received from the base station 1 as a radio reception signal 50, but a value which is stored in the communication terminal 10 itself, in advance can be used as at least one of the items of information included in the setting information 54.

The transmitting unit 40 comprises a data buffer 41, a data reading unit 42, a channel encoding unit 43, a control information creating unit 44, a physical channel creating unit 45, a modulating unit 46 and a radio transmitting unit 47.

The data buffer 41 is a storage unit in which the user data 51 to be transmitted is temporarily stored. The remaining data amount 41a (amount of data that has not yet been transmitted) in the data buffer 41 is provided to a transmission parameter determining unit 30.

The data reading unit 42 reads data from the data buffer 41 in response to an instruction from a transmission data amount determining unit 34 (which will be described later) in the transmission parameter determining unit 30.

The control information creating unit 44 creates control information data 62 specifying contents of a modulation method/encoding ratio applied to transmission data.

The channel encoding unit 43 conducts encoding processes on transmission data comprising user data 61 to be transmitted, the control information data 62 input by the control information creating unit 44, and control information data 63 other than the control information data 62.

The physical channel creating unit 45 conducts multiplexing of a channel (communication path) to the base station 1, an interleaving process and the like.

The modulating unit 46 conducts a modulation process on the transmission data encoded by the channel encoding unit 43 based on a modulation method such as QPSK (Quadrature Phase Shift Keying), 16QAM (16 Quadrature Amplitude Modulation) or the like.

The radio transmitting unit 47 converts the transmission data modulated by the modulating unit 46 into analog signals by a D/A converter (not shown), and, conducts frequency conversion,electric power amplification, filtering and the like in order to obtain the wireless transmission signal 60 to be transmitted via a transmission antenna (not shown).

The transmission parameter determining unit 30 comprises a step value determining unit 31 (transmission rate control unit), a transmission rate determining unit 32 (transmission rate control unit) a modulation method/encoding ratio determining unit 33, the transmission data amount determining unit 34 and the setting information holding unit 35.

The setting information holding unit 35 is a storage unit in which the information included in the setting information 54 received as the radio reception signal 50 from the base station 1, such as the above maximum allowable transmission rate 54a, the minimum allowable transmission rate 54b, the step value 54c, the transmission interruption time 54d and the like are stored in an updatable manner. These values are held as they are until a corresponding value is newly received.

The step value determining unit 31 determines a step value ΔR to be used when the transmission rate R is sequentially ramped up in a step-by-step manner, in a manner based mainly on information about the remaining data amount 41a in the data buffer 41. Also, this step value ΔR is used when the transmission rate R is ramped down in a step-by-step manner.

The transmission rate determining unit 32 calculates the transmission rate R. The transmission rate determining unit 32 also confirms whether or not the transmission rate R has exceeded the maximum allowable transmission rate Rmax, conducts a ramping down of the transmission rate R upon receiving the transmission rate decreasing command 53, and conducts a transmission interrupting process.

The modulation method/encoding ratio determining unit 33 determines the modulation method and the encoding ratio applied to the transmission data based on a transmission data amount indicated by the transmission data amount determining unit 34, the control information data 52 (for example, ACK/NACK specifying success/failure of the reception of the wireless transmission signal 60 on the base station 1 side), or the like which is a response to upstream transmission of data to the base station 1 (wireless transmission signal 60), and sets information of the determined modulation method and encoding ratio in the transmission data amount determining unit 34, the control information creating unit 44, the physical channel creating unit 45 and the modulating unit 46.

The transmission data amount determining unit 34 determines the transmission data amount based on information such as the transmission rate R input from the transmission rate determining unit 32, the modulation method and encoding ratio input from the modulation method/encoding ratio determining unit 33, or the like, and instructs the data reading unit 42 of the data amount to be read from the data buffer 41.

Functions of the respective components from the step value determining unit 31 to the setting information holding unit 35 in the above transmission parameter determining unit 30 can be realized by software/firmware executed by a microprocessor, or by a dedicated logic circuit, a general purpose logic circuit or memory, or by a combination of these techniques, for example.

Similarly, functions of the respective components in the receiving unit 20 and the transmitting unit 40 can be realized by software/firmware executed by a microprocessor, or by a dedicated logic circuit, a general purpose logic circuit or memory, or by a combination of these techniques, for example.

Hereinafter, an example of operations of the communication terminal 10 and a control method of the communication terminal 10 according to the present embodiment will be explained.

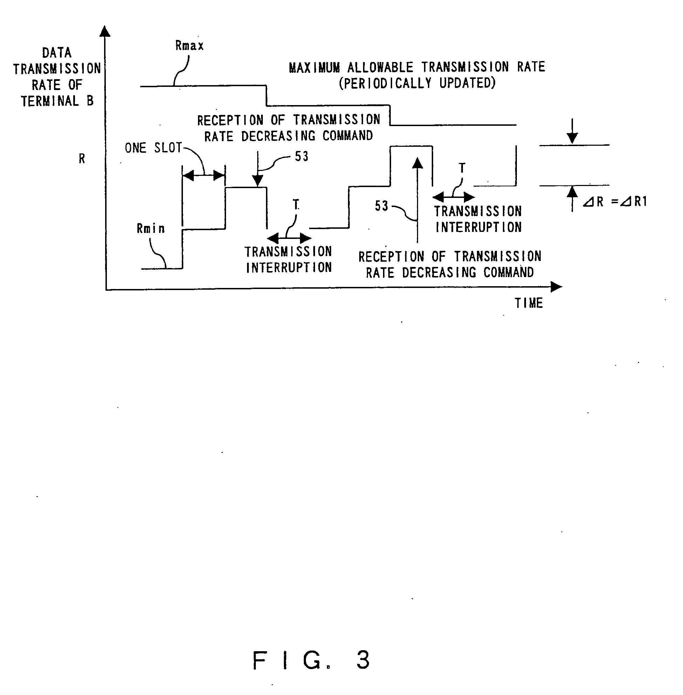

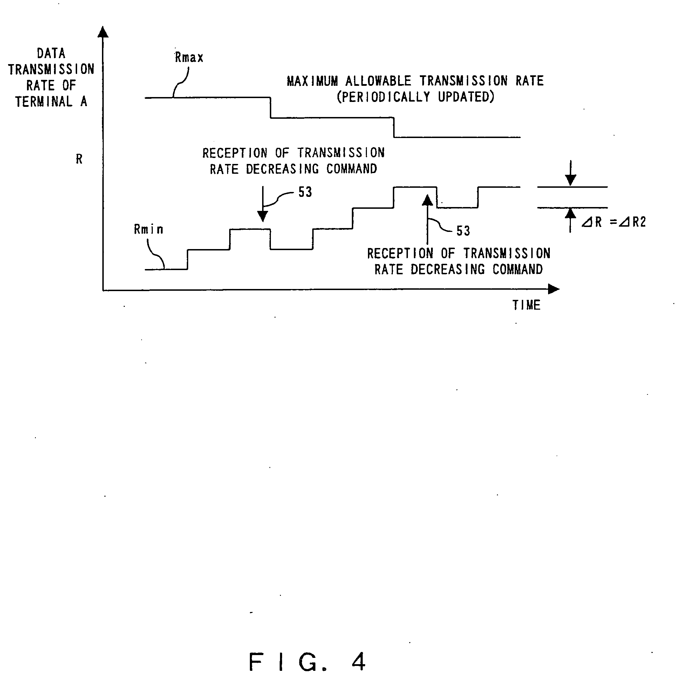

As shown in Fig. 3 and Fig. 4, in the present embodiment, when transmission data comprising the user data 61, control information data 62, control information data 63 and the like is to be transmitted, the transmission starts with a minimum allowable transmission rate Rmin as the transmission rate R, and control is conducted in which the transmission rate R is increased as long as the transmission rate R does not exceed the maximum allowable transmission rate Rmax, while sequentially increasing the transmission rate R by the step value ΔR.

In the case of the present embodiment, the step value ΔR is variable, and as the step value ΔR, various values (the step values ΔR1, ΔR2, ΔR3 etc.) set in the setting information holding unit 35 are arbitrarily used.

For example, as shown in Fig. 3, (for example, in the case of the communication terminal 10 (terminal B)), the step value ΔR1 which is relatively high can be used, and as shown in Fig. 4, (for example, in the case of the communication terminal 10 (terminal A)), the step value ΔR2 (< step value ΔR1) which is a relatively low default value can be used.

Examples of determining which of the step value ΔR1 and the step value ΔR2 is to be used include a method in which when the amount of transmission data is relatively large, the step value ΔR1 which is relatively high is used, and when the amount of transmission data is relatively small, the step value ΔR2 which is low is used.

In the case of the present embodiment, when the communication terminal 10 receives, while transmitting data to the base station 1, a transmission rate decreasing command 53 from the base station 2 which is outside the territory of the base station 1, the transmission rate R is decreased in units of the step value ΔR (in the case of the terminal B in Fig. 3 and the terminal A in Fig. 4).

Further, in the case of the present embodiment, when the step value ΔR1, which is relatively high, is used as the step value ΔR at the time of receiving a transmission rate decreasing command 53 (in the case of the terminal B in Fig. 3), data transmission to the base station 1 is interrupted for a predetermined transmission interruption time T. This value as the transmission interruption time T can be controlled variably as will be explained.

As a result of the above control, in the case of the present embodiment, data transmission to the base station 1 can be conducted with a high throughput by using a high transmission rate R, realized by selection of a step value ΔR which is relatively high in a situation where interference with the neighboring base station 2 does not occur often. Accordingly, effective utilization of a communication band is realized between the base station 1 and the communication terminals 10.

Further, when interference with base station 2 (neighboring cell) is excessive due to data transmission between the communication terminal 10 and the base station 1 and when the corresponding communication terminal 10 employs the step value ΔR1 as the step value ΔR which is relatively high, a penalty not only of decrease of the transmission rate R but also of transmission interruption is imposed on that communication terminal 10. Accordingly, ill effects at the neighboring base station 2 due to interference are suppressed. This transmission interruption is applied to communication terminals 10 using the step value ΔR which is relatively high, accordingly, this configuration is effective not only for suppression of interference with the neighboring base station 2, but also for maintaining fairness among the respective communication terminals 10.

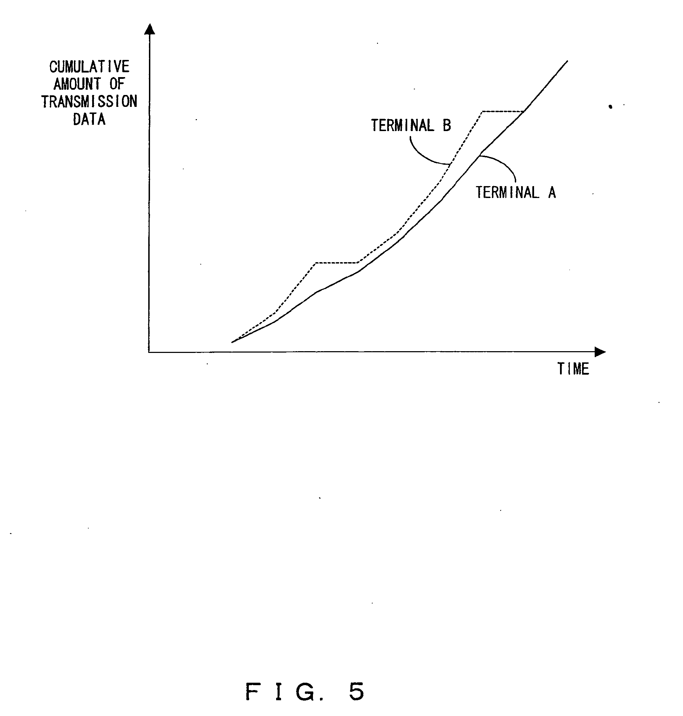

Fig. 5 is a line graph in which examples of transmission of cumulative amounts of transmission data are compared between the case of the communication terminal 10 (terminal A) using the step value ΔR2 as the step value ΔR which is relatively low, and the case of the communication terminal 10 (terminal B) using the step value ΔR1 as the step value ΔR which is relatively high as above.

As shown by Fig. 5, it is found that the cumulative amount of transmission data of terminal A is almost the same as that of terminal B with respect to a relatively broad scope in the direction of a time axis, and that fairness among the terminals is secured. Also it is found that, for terminal B, a large cumulative amount is secured in a relatively narrow time span so that a large amount of data can be efficiently transmitted to the base station in a short time.

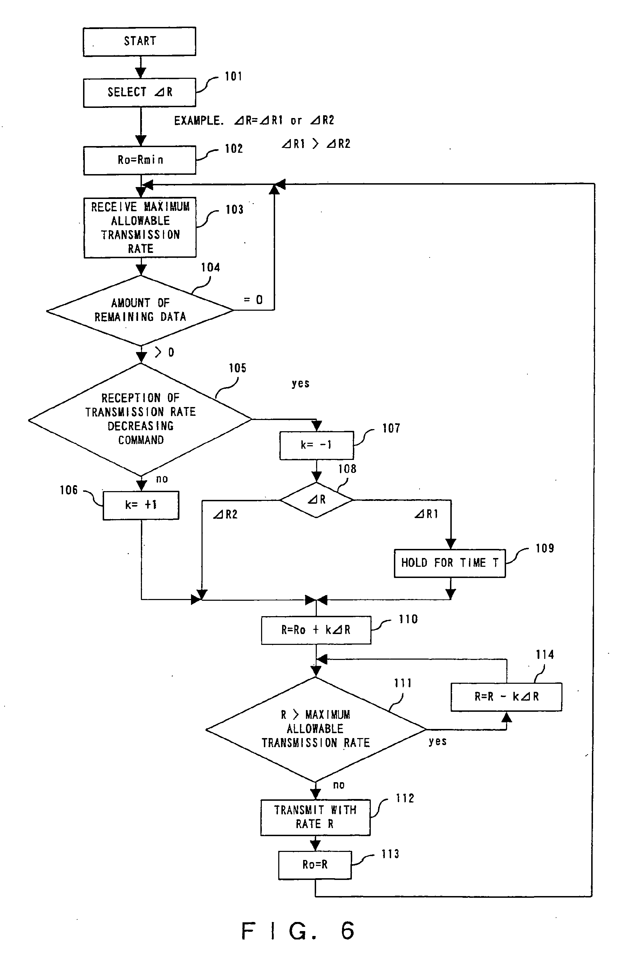

Hereinafter, operations in each communication terminal 10 will be explained in more detail by referring to the flowchart of Fig. 6.

First, the step value determining unit 31 selects the step value ΔR1 or the step value ΔR2 in the setting information holding unit 35, and sets the step value ΔR to the selected step value ΔR1 or ΔR2 (step 101). Also, the step value determining unit 31 sets the minimum allowable transmission rate Rmin stored in the setting information holding unit 35 as a reference transmission rate R0 (step 102).

Thereafter, prior to transmission, the step value determining unit 31 receives the maximum allowable transmission rate Rmax from the base station 1 as a transmission partner, and stores the rate in the setting information holding unit 35 (step 103).

Then, the amount of data in the data buffer 41 which has not yet been transmitted is determined (step 104) and when there is data which has not yet been transmitted, whether a transmission rate decreasing command 53 has been received from a base station 2 in another cell is confirmed (step 105), and when a command has not been received, a variable k for ramping control of the transmission rate R is set to +1 (step 106), and the transmission rate R is calculated (step 110). In this case, k is set to a positive number, accordingly, the transmission rate R is ramped up from the reference transmission rate R0 by (k × step value ΔR).

Thereafter, it is discriminated whether or not the calculated transmission rate R has exceeded the maximum allowable transmission rate Rmax (step 111), and when the transmission rate R has not exceeded it, data transmission to the base station 1 based on the calculated transmission rate R is conducted (step 112), the reference transmission rate R0 is updated to the current transmission rate R (step 113), and the process returns to step 103.

When it is determined in the step 111 that the transmission rate R exceeds the maximum allowable transmission rate Rmax, a process of subtracting (k × step value ΔR) from the current transmission rate R is executed (step 114).

When reception of the transmission rate decreasing command 53 occurs in the above step 105, k is set to -1 for subtraction of the transmission rate R in the subsequent step 110 (step 107).

Thereafter, the step value ΔR which is currently set is checked (step 108), and when the step value ΔR1 as the step value ΔR which is relatively high is used, data transmission is interrupted for the transmission interruption time T1 (step 114). When the step value ΔR2 (< the step value ΔR1) as the step value ΔR which is relatively low is used, data transmission is not interrupted.

Thereafter, the transmission rate R is calculated in a step 110, and the transmission rate R is calculated to be a value obtained by subtracting the step value ΔR from the previous transmission rate R because k is set to -1 as described above, accordingly the transmission rate R is reduced. Thereafter, data transmission based on the decreased transmission rate R is conducted (step 111 to step 113).

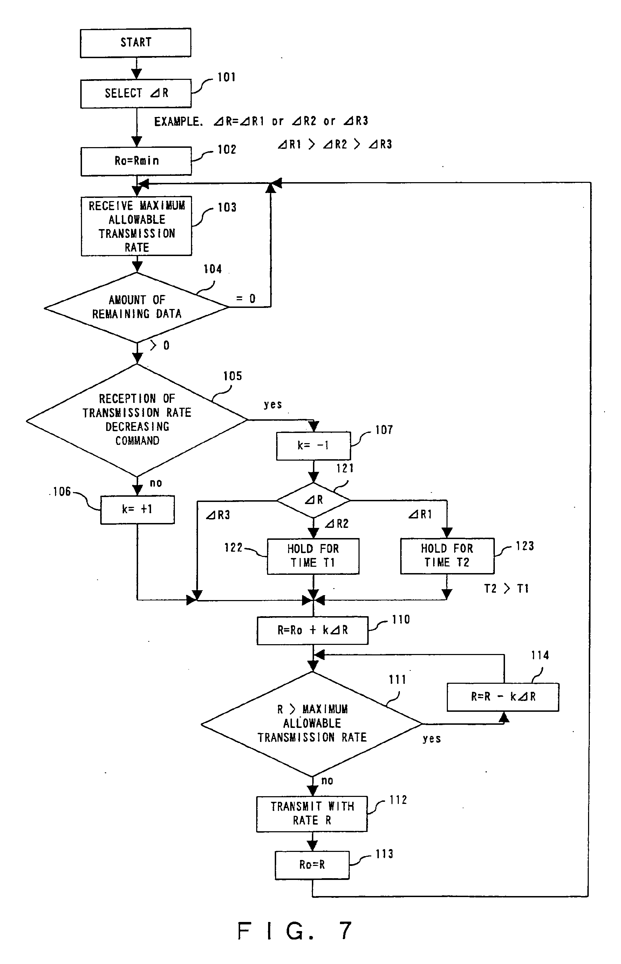

Next, the case in which an interruption time of data transmission is variably controlled when receiving the transmission rate decreasing command 53 will be explained by referring to the flowchart of Fig. 7.

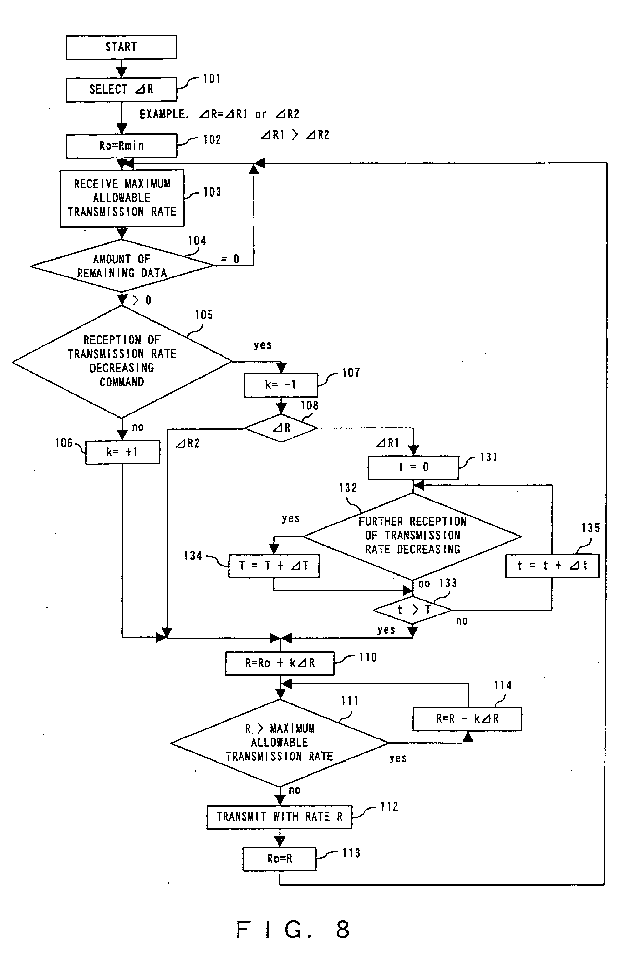

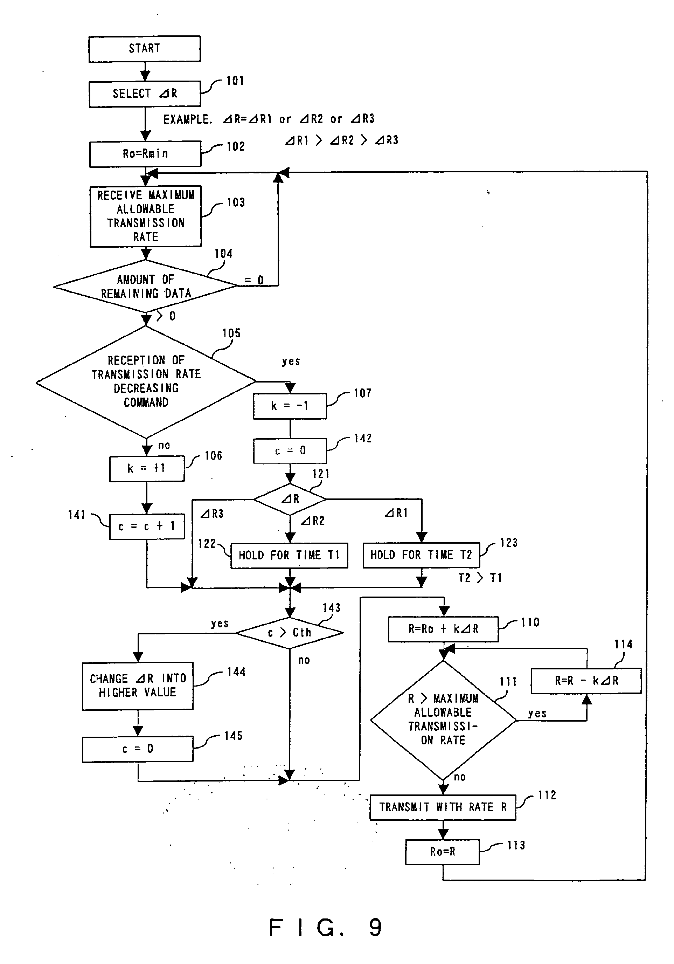

It is noted that, in Fig. 7, process steps similar to those in the above Fig. 6 are denoted by common numerals and duplicated explanation thereof will be omitted. This also applies to the subsequent Fig. 8 and Fig. 9.

In an example of the above Fig. 7, a plurality of step values ΔR1, ΔR2 and ΔR3 having different values to one another are set in the setting information holding unit 35 as options for the step value ΔR. The relationship between these step values satisfies the inequality, step value ΔR1 > step value ΔR2 > step value ΔR3.

In the step 101, one of the above three step values ΔR1, ΔR2 and ΔR3 is selected and set.

In this Fig. 7, in the case that the step value ΔR is set to a step value other than the step value ΔR3 as the lowest value, i.e., the step value ΔR1 or ΔR2 when the presence or absence of interruption is determined (step 121), based on the size of the step value ΔR upon receiving the transmission rate decreasing command 53, the length of the transmission interruption time T is changed in accordance with the step values ΔR1 and ΔR2.

Specifically, when the step value ΔR is set to the step value ΔR1 which is the highest, the transmission interruption time T is set to the transmission interruption time T2 which is the longest (step 123). When the step value ΔR is set to the step value ΔR2 which is lower than the step value ΔR1, the transmission interruption time T is set to the transmission interruption time T1 which is shorter than the transmission interruption time T2 (step 122).

As above, the example of Fig. 7 is different from that of Fig. 6 in that the interruption time is changed in proportion to a size of the step value ΔR, upon receiving the transmission rate decreasing command 53.

Thereby, fairness among the communication terminals 10 is secured more accurately in accordance with setting conditions of the step value ΔR in the respective communication terminals 10.

Fig. 8 shows a flowchart illustrating another variation of a method of controlling the communication terminal 10 according to the present embodiment. In the case of Fig. 8, whether the transmission rate decreasing command 53 has been received is further determined in the transmission interruption time T in the step 109 in the above Fig. 6, and when it has been received, control is conducted so that the transmission interruption time T is extended.

Specifically, during the transmission interruption time T caused by reception of the transmission rate decreasing command 53, a timer variable t is first initialized to 0 (step 131), thereafter, whether the transmission rate decreasing command 53 has been received is determined (step 132), and when it has been received, the transmission interruption time T is extended by ΔT (step 134).

These processes of the steps 132 and 134 are repeated while increasing t by Δt (step 135) until t exceeds the transmission interruption time T (step 133).

Thereby, when the transmission rate decreasing command 53 is further detected during the transmission interruption time T, a heavier penalty can be imposed on the communication terminal 10 using the step value R1 as the step value ΔR which is high, accordingly, it can be expected that the occurrence of ill effects in the neighboring base station 2 due to interference will be suppressed more effectively.

Fig. 9 shows a flowchart illustrating still another variation of the present embodiment. In an example of Fig. 9, a process is added to those in the flowchart illustrated in the above Fig. 7, in which the step value ΔR itself, to be added to the transmission rate R is changed to a high value when the transmission rate decreasing command 53 is not received while the transmission rate R is ramped up.

Specifically, in the above Fig. 9, a variable c is used for controlling the number of data transmissions that is conducted without receiving the transmission rate decreasing command 53. This variable is initialized to 0 in a step 142.

Then, after the step 106 is executed, if reception of a transmission rate decreasing command 53 is not detected in a determination (step 105) in the flowchart in the above Fig. 7, the variable c is incremented (step 141), and further it is determined whether or not this variable c exceeds a predetermined threshold value Cth (step 143).

Specifically, when the number of data transmissions conducted without reception of a transmission rate decreasing command 53 (value of the variable c) exceeds the predetermined threshold value Cth, the current step value ΔR set in the step 101 is changed to a higher value (step 144), and the variable c is initialized to 0 (step 145).

In other words, in this step 144, when the current step value ΔR is the step value ΔR3 (step value ΔR2), the current step value ΔR is changed to the step value ΔR2 (step value ΔR1).

Also, when reception of a transmission rate decreasing command 53 is detected in the.above step 105, the variable c is initialized to 0 (step 142).

Additionally, in the steps 121 to 123 in Fig. 9, a control of changing the transmission interruption time T in proportion to a size of the step value ΔR is conducted, however, it is possible that the interruption is conducted simply for a predetermined transmission interruption time T in the case that the step value ΔR has the highest value as shown in the above Fig. 6.

In the example of Fig. 9, interference with the neighboring base station 2 occurs less frequently (in other words, the probability of receiving a transmission rate decreasing command 53 is low) and a situation where a transmission rate R which is relatively high can be used for transmission between the communication terminal 10 and the base station 1 is detected and used precisely, so that data transmission with the transmission rate ΔR at a further higher step value R is realized.

Additionally, although it is not shown in any drawing, it is possible that a control is conducted so that a length of interruption of information transmission (length of the transmission interruption time T in the step 109 in Fig. 6 for example) is in proportion to the time for which information transmission has been conducted using a step value ΔR which is relatively high (for example, the number of times of execution of the step 112 in Fig. 6).

As explained above, according to the present embodiment, for example in HSUPA or the like, in the case where each communication terminal 10 under the control of the base station 1 conducts data transmission to the base station 1 while ramping up a transmission rate R in a step-by-step manner in units of a step value ΔR, the highest possible step value ΔR is selected so that throughput can be further improved.

Also, when each communication terminal 10 under the control of the base station 1 conducts information transmission to the base station 1 while ramping up the transmission rate R autonomously, both improvement of throughput in each communication terminal 10 and securing of fairness of transmission rate distribution among a plurality of communication terminals 10 can be realized at the same time.

In addition, the present invention is not limited to configurations illustrated as the above described embodiments.

According to the present invention, it is possible that throughput is improved in the case where each wireless communication device under the control of a base station conducts information transmission to the base station while autonomously ramping up a transmission rate.

Further, in the case where each wireless communication device under the control of a base station conducts information transmission to the base station while autonomously ramping up a transmission rate, it is possible to realize improvement of throughput in each wireless communication device and securing of fairness of transmission rate distribution among a plurality of wireless communication devices at the same time.

## Claims

1. A wireless communication device (10) for communicating information with a base station, comprising:
a storage unit (35) for storing a maximum value as a transmission rate (R) for information transmission to the base station, and a plurality of different step values which are used upon increasing/decreasing the transmission rate (R); and
a transmission rate control unit (30) for selecting one of the plurality of step values and increasing/decreasing the transmission rate (R) in units of the selected step value in a step-by-step manner.

2. A wireless communication device (10) for communicating information with a base station, comprising:
a storage unit (35) for storing a maximum value as a transmission rate (R) for information transmission to the base station, and a plurality of different step values which are used upon increasing/decreasing the transmission rate (R); and
a transmission rate control unit (30) for selecting one of the plurality of step values, increasing/decreasing the transmission rate (R) in units of the selected step value in a step-by-step manner, conducting decrease of the transmission rate (R) and interruption of the information transmission in the case where the step value which is relatively high is used at the time of receiving, from outside, a transmission rate decreasing command (53) that requests decrease of the transmission rate (R), and conducting decrease of the transmission rate (R) in the case where the step value which is relatively low is used.

3. The wireless communication device (10) according to claim 2, wherein:
the transmission rate control unit (30) further comprises at least one of:
control logic for controlling a length of the interruption of the information transmission in proportion to a size of the step value which is relatively high;
control logic for controlling a length of the interruption of the information transmission in proportion to a length of time of the information transmission conducted by using the step value which is relatively high; and
control logic for controlling a length of the interruption of the information transmission by using length information of the interruption from the base station notification.

4. The wireless communication device (10) according to claim 2, wherein:
the transmission rate control unit (30) further comprises at least one of:
control logic for extending a length of the interruption when the transmission rate decreasing command (53) is further received during the interruption;
control logic for starting the information transmission by using the step value which is relatively low when the transmission rate decreasing command (53) is received before starting the information transmission;
control logic for changing the step value to be used to the step value which is relatively high when the transmission rate decreasing command (53) is not received upon ramping up the transmission rate (R) during the information transmission; and
control logic for starting the information transmission by using only the step value which is relatively low when the transmission rate decreasing command (53) is received before starting the information transmission.

5. The wireless communication device (10) according to any preceding claim, wherein:
the base station and the wireless communication device (10) constitute a mobile phone systembased on the WCDMA (Wideband Code Division Multiple Access) method, and the information transmission is conducted in accordance with HSUPA (High-Speed Uplink Packet Access).

6. A method of controlling a wireless communication device (10) for communicating information with a base station, comprising:
a first step of setting a plurality of different step values in the wireless communication device (10); and
a second step of increasing/decreasing a transmission rate (R) of information transmission to the base station in units of one of the plurality of step values in a step-by-step manner, conducting decrease of the transmission rate (R) and interruption of the information transmission in the case where one of the step values which is relatively high is used at the time of receiving, from outside, a transmission rate decreasing command (53) that requests decrease of the transmission rate (R), and conducting decrease of the transmission rate (R) in the case where one of the step values which is relatively low is used.

7. The method of controlling a wireless communication device (10) according to claim 6, wherein:
a length of the interruption of the information transmission is controlled in proportion to a size of the step value which is relatively high in the second step.

8. The method of controlling a wireless communication device (10) according to claim 6, wherein:
a length of the interruption of the information transmission is controlled in proportion to a length of time of the information transmission conducted by using the step value which is relatively high in the second step.

9. The method of controlling a wireless communication device (10) according to claim 6, wherein:
a length of the interruption of the information transmission is controlled by using the length information of the interruption from the base station notification in the second step.

10. The method of controlling a wireless communication device (10) according to claim 6, wherein:
a length of the interruption is extended when the transmission rate decreasing command (53) is further received during the interruption in the second step.

11. The method of controlling a wireless communication device (10) according to claim 6, wherein:
the information transmission is started by using the step value which is relatively low when the transmission rate decreasing command (53) is received before starting the information transmission in the second step.

12. The method of controlling a wireless communication device (10) according to claim 6, wherein:
the step value to be used is changed to a different step value which is relatively high when the transmission rate decreasing command (53) is not received upon ramping up the transmission rate (R) during the information transmission in the second step.

13. The method of controlling a wireless communication device (10) according to claim 6, wherein:
the information transmission is started by using only the step value which is relatively low when the transmission rate decreasing command (53) is received before starting the information transmission in the second step.

14. The method of controlling a wireless communication device (10) according to any of claims 6 to 13, wherein:
the base station and the wireless communication device (10) constitute a mobile phone system based on the WCDMA (Wideband Code Division Multiple Access) method, and the information transmission is conducted in accordance with HSUPA (High-Speed Uplink Packet Access).
